# EUROPEAN PATENT APPLICATION

(11) **EP 0 825 554 A1**
(43) Date of publication of application: **25.02.1998**
(21) Application number: 96202269.5
(22) Date of filing: 13.08.1996
(51) Int. Cl.: G06K 19/077

(54) **Sealing device**

(71) Applicant: Fyrtech Microelectronics AB, 462 23 Vänersborg (SE)
(72) Inventor: Lindqvist, Henrik, 68199 Mannheim (DE); Lindqvist, Frank, 64319 Pfungstadt (DE)
(74) Representative: Quintelier, Claude

(57) **Abstract**

The present invention relates to a sealing device provided for being applied onto an object to be sealed, said device comprising an electronic component with a memory, which component is connected to a first loop comprising a communication means, said communication means being provided for communicating with reading means, characterised in that a second loop, connected to the electronic component, is provided for letting energy circulating through it and to be broken upon breaking said sealing device.

## Description

The present invention relates to a sealing device provided for being applied onto an object to be sealed, said device comprising an electronic component with a memory, which component is connected to a first loop comprising a communication means, said communication means being provided for communicating with reading means.

Such a device is known from patent application PCT/EP92/02841. According to this known device, the memory of the electronic component is stored with a codeword, so that when its operation is checked by the reading means via the communication means in the form of a coil acting as an antenna, it sends out the stored codeword. Upon opening the object to which the sealing device is applied, the first loop or the electronic component will be broken, so that the electronic component is prevented from sending out its codeword when read. In this manner, it is detected that the sealing device has been broken.

A drawback of this known device is that a communication, in this case comprising a codeword, is performed between the electronic component and the reading means only if the sealing device has not been broken. If the sealing device has been broken, the first loop will be broken and connection between the communication means and the electronic component will be broken, so that no communication can be performed. Consequently, difference can not be made between sealing devices whose operation has not been checked and broken sealing devices whose operation has been checked. In both cases, no communication has been performed between the sealing device and the reading means.

It is an object of the invention to provide a sealing device, which enables to perform a communication with the reading means, even if the sealing device has been broken.

To this object, the device according to the invention is characterised in that a second loop, connected to the electronic component, is provided for letting energy circulating through it and to be broken upon breaking said sealing device. By providing that the second loop is provided to be broken upon breaking said sealing device, this second loop forms the sealing part of the device. The electrical connection between the electronic component and the communication means remains, even if the second loop is broken, so that a communication between the reading means and the electronic component can still be performed. In case the operation of a sealing device is checked, a communication between the sealing device and the reading means is performed. In case the operation of a sealing device in not checked, no communication is performed between the sealing device and the reading means. Consequently, difference can be made between broken sealing devices whose operation has been checked and sealing devices whose operation has not been checked. By providing that the second loop is provided for letting energy circulating through it, it is possible to detect whether or not the sealing device has been broken.

According to a first preferred embodiment, the sealing device according to the invention is provided for being powered by said reading means. This enables to form a simple compact sealing device which is only activated when communicating with the reading means and which is independent from an own power source, such as e.g. a battery, which would otherwise have to be provided on the sealing device.

According to a second preferred embodiment of the device according to the invention, said second loop is connected in parallel with the first loop. This enables to have an electronic component which is only provided with two connection ports instead of four, for connecting the first loop and the second loop, without affecting the presence of two loops.

According to a third preferred embodiment of the device according to the invention, a capacitance or an inductance is provided in the second loop. This enables to detect a difference of resonance frequency of the energy circulating through the first and the second loop. In case the object has been opened, the second loop will be broken so that energy will circulate only through the first loop, which gives another resonance frequency than in the case the second loop is intact.

According to a fourth preferred embodiment, the device according to the invention comprises means provided for generating a first codeword upon establishing that the second loop is intact and a second codeword upon establishing that the second loop is broken. This forms an alternative to detect whether or not the sealing device has been broken.

According to a fifth preferred embodiment of the device according to the invention, said memory is connected to counter means provided for memorising how many times the object, onto which the device has been applied, has been sealed. This enables to use the same sealing device to objects, which have to be opened several times at determined places during the travel between the originating place and the destination place, e.g. a container which has to be checked several times, such as for example several customs.

According to a sixth preferred embodiment of the device according to the invention, a first identification codeword for identifying said device is stored in said memory. This enables to readily identify the device, which is useful in case a plurality of sealing devices, each having their own first identification codeword, have to be checked with the reading means.

Referring to the annexed figures, the device according to the invention will now be described into details, whereby same reference numerals refer to a same component.

Figure 1 is a schematic view of the sealing device according to a first preferred embodiment.

Figure 2 is a schematic view of the sealing device according to a second preferred embodiment.

Figure 3 is a schematic view of the sealing device according to a third preferred embodiment.

Figure 4 is a detail of the electronic component of the sealing device.

Figure 5 is a detail of the electronic component of the sealing device according to an alternative.

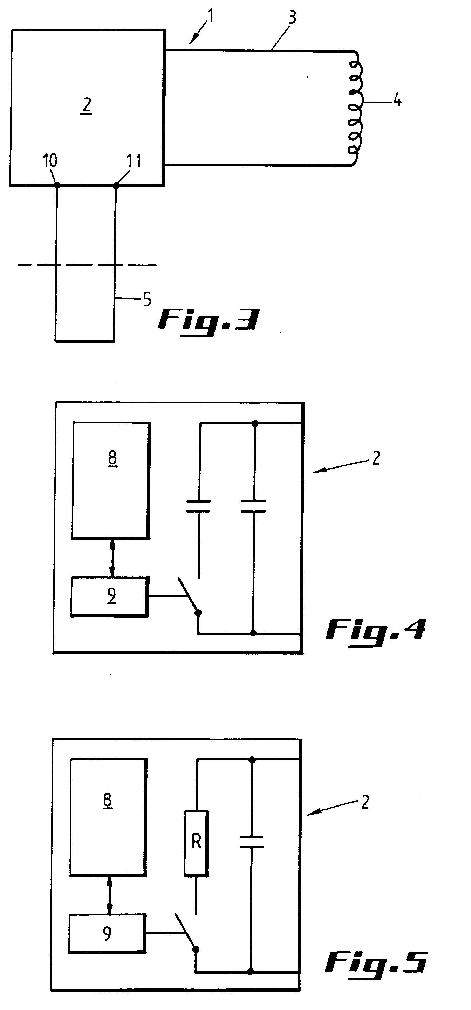

The sealing device 1 according to the invention, illustrated in the figures, is provided to be applied on an object to be sealed, such a for example a container or a valuable product. It comprises an electronic component 2, e.g. a microchip, provided with a memory 8 (Figures 4 and 5). The electronic component is connected to a first loop 3 comprising a communication means, for example a coil 4. The coil 4 is provided for communicating with reading means (not illustrated). According to the invention, a second loop 5 is connected to the electronic component 2, either directly or in parallel with the first loop 3, and is provided for letting energy circulating through it and to break (illustrated by the dotted lines) upon breaking the sealing device. The advantage of having the second loop 5 connected in parallel with the first loop 3 is that only two in/outputs must be provided on the electronic component.

The second loop is a galvanic conductive loop which preferably consists of a very thin wire having for example a section diameter of 30 µm. Such a thin wire prevents the second loop from being easily fraudulently fixed once it has been broken.

The sealing device according to the invention is preferably passive, i.e. powered by the reading means, so that a very compact device can be made which is not dependent from the power of an own source, such as e.g. a battery, which would otherwise be provided in the sealing device.

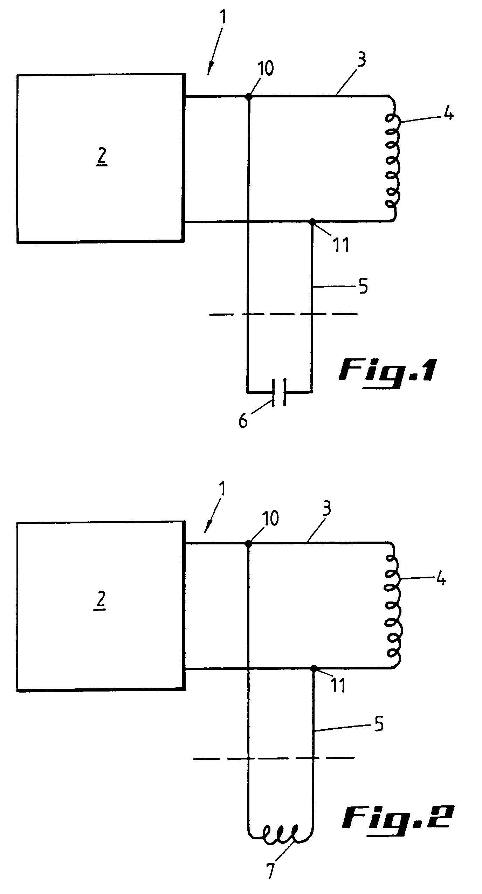

Turning now to Figures 1 and 2, a first, respectively a second embodiment, are illustrated. The second loop comprises further a capacitance 6 (Figure 1) or an inductance 7 (Figure 2). To check if the sealing device according to Figures 1 and 2 is open, use is made of the resonance frequency technique. According to this technique, the reading means, which comprises another communication means such as a coil, is coupled, e.g. inductively to the coil 4 and supplies energy, e.g. current, through the intermediary of the communication coil 4 to the first loop 3 and the second loop 5. If the object has been opened, the second loop will be broken, as illustrated by the dotted lines, so that no energy passes through the capacitance 6 or the inductance 7. If the second loop 5 is still intact, a portion of the supplied energy will pass through this parallelly connected second loop 5. In this case, a parallel LC (Figure 1) or LL (Figure 2) circuit is formed by the communication coil 4 of the first loop 3 and the capacitance (Figure 1) or inductance (Figure 2) of the second loop 5. Consequently, the energy returned to the reading means will resonate at a different frequency than in the case the second loop 5 is broken whereby no energy will circulate through the second loop 5.

Figure 3 illustrates a third preferred embodiment of the sealing device according to the invention. According to this embodiment, the electronic component comprises a logic component 9 connected to the memory 8 (Figures 4 and 5). The logic component could for example be a D-flip-flop, whereby the first extremity 10 of the second loop 5 is connected to the clock input of the flip-flop and the second extremity 11 of the second loop 5 to the D-input of the flip-flop. Upon powering up the sealing device, energy is supplied to the first extremity 10 of the second loop 5. If the second loop is intact, the energy will arrive at the second extremity 11. This means that both the D-input and the clock input have the value 1. The output Q gives consequently the value 1 which indicates that the second loop is intact. If the second loop is broken, energy will not arrive at the second extremity of the second loop. This means that the clock input has the value 1 and the D-input the value 0. The output Q gives consequently the value 0 which indicates that the second loop is broken. This value is then supplied to the reading means and preferably also stored in the memory. By storing this value in the memory, which could for example be an EEPROM, it is possible to retrieve this value later, so that one could detect that the second loop has been broken once.

Preferably, a first identification codeword identifying the sealing device is stored in the memory 8, so that when checking a plurality of sealing devices each having an own first identification codeword, they can be distinguished from each other.

Preferably, the electronic component 2 also comprises counter means for memorising how many times the object, onto which the device has been applied, has been sealed. This could for example be realised by providing that said first codeword comprises several bits which are each time incremented by the logic component when a change in state of the sealing device, i.e. broken or intact has occurred. For example, the first codeword has value 0000. When the second loop is connected to the electronic component, the logic component increases the first codeword into a second codeword 0001, upon powering up the sealing device. When the second loop is broken the second codeword changes into a third codeword 0010. When the second loop, preferably a new one, is connected, value 0011 is given and so on. Thus, a value 0101 means that the object has been sealed 2 times and is now closed. A value 1000 means that the object has been sealed 4 times and is now open.

Preferably, the memory 8 is provided for being stored with a second identification codeword by means of writing means, which second identification codeword identifies the content of the object to be sealed. This enables a user, upon reading the content of the memory by means of the reading means, to check what the content of the sealed object is.

The second loop in the embodiment according to Figure 3 could also be a light conductive or optical loop instead of a galvanic conductive loop. In this case, the second extremity 11 of the second loop would check the presence of energy in the form of light.

Figures 4 and 5 illustrate possible embodiments of the electronic component 2, using known transmission technologies. Figure 4 illustrates the FM technology and Figure 5 the AM technology. These techniques are known as such and will therefore not be described further in detail.

The described embodiments illustrate that the energy is supplied by the reading means. It is clear that energy could also be provided by the sealing device itself, provided a battery or another power source is comprised in the sealing device. In this case, the first loop would only serve as means for communicating to the reading means if the second loop is broken or not. Instead of current or light, acoustic energy could also be used.

The illustrated communication means have been illustrated as communication coils. It is clear that other communication means could be used such as for example an antenna, in particular a dipole antenna. This type of communication means could be used if communication is performed at a high frequency, whereas the coils are provided for performing communication at a low frequency.

## Claims

1. A sealing device provided for being applied onto an object to be sealed, said device comprising an electronic component with a memory, which component is connected to a first loop comprising a communication means, said communication means being provided for communicating with reading means, characterised in that a second loop, connected to the electronic component, is provided for letting energy circulating through it and to be broken upon breaking said sealing device.

2. A device according to claim 1, characterised in that it is provided for being powered by said reading means.

3. A device according to claim 1 or 2, characterised in that said second loop is connected in parallel with the first loop.

4. A device according to any one of the claims 1 to 3, characterised in that a capacitance is provided in the second loop.

5. A device according to any one of the claims 1 to 3, characterised in that an inductance is provided in the second loop.

6. A device according to claim 1 or 2, characterised in that it comprises means provided for generating a first codeword upon establishing that the second loop is intact and a second codeword upon establishing that the second loop is broken.

7. A device according to claim 6, characterised in that said memory is connected to counter means provided for memorising how many times the object, onto which the device has been applied, has been sealed.

8. A device according to any one of the claims 1 to 7, characterised in that a first identification codeword for identifying said device is stored in said memory.

9. A device according to any one of the claims 1 to 8, characterised in that said memory is provided for being stored with a second identification codeword by means of writing means, which second identification codeword identifies the content of the object to be sealed.

10. A device according to claim 1 or 2, characterised in that said second loop is an optical loop.
